# EUROPÄISCHE PATENTSCHRIFT

(11) **EP 3 043 939 B1**
(45) Veröffentlichungstag und Bekanntmachung des Hinweises auf die Patenterteilung: **13.03.2019**
(21) Anmeldenummer: 14795945.6
(22) Anmeldetag: 10.09.2014
(51) Int. Cl.: B23B 31/00, B23B 31/22, G01N 33/46

(54) **BOHRFUTTER UND BOHRNADEL-BOHRFUTTER-ANORDNUNG**
DRILL CHUCK AND DRILLING NEEDLE-DRILL CHUCK ASSEMBLY
MANDRIN ET ENSEMBLE MANDRIN-AIGUILLE DE FORAGE

(30) Priorität: 13.09.2013 DE 102013015131
(43) Veröffentlichungstag der Anmeldung: 20.07.2016
(73) Patentinhaber: IML-Instrumenta Mechanik Labor GmbH, 69168 Wiesloch (DE)
(72) Erfinder: HUNGER, Sebastian, 69168 Wiesloch (DE); HUNGER, Fabian, 69181 Leimen (DE); HUNGER, Erich, 76133 Karlsruhe (DE)
(74) Vertreter: Mehl-Mikus, Claudia
(86) Internationale Anmeldenummer: PCT/EP2014/002442
(87) Internationale Veröffentlichungsnummer: WO 2015/036114

(56) Entgegenhaltungen:
- WO-A2-02/064295
- DE-A1- 4 105 515
- DE-A1- 10 031 338
- DE-A1-102011 103 636
- GB-A- 713 042
- US-A- 2 400 169

## Beschreibung

Die nachfolgende Erfindung bezieht sich auf ein Bohrfutter sowie auf eine Anordnung einer Bohrnadel und des Bohrfutters.

Als "Bohrfutter" wird hierin eine Spannvorrichtung bezeichnet, die an einem Werkzeug das Einsatzwerkzeug wie einen Bohrer oder hier eine Bohrnadel aufnimmt. Ein häufig eingesetztes Bohrfutter ist ein Dreibackenfutter, bei dem das zu fixierende Teil zwischen drei Spannbacken festgeklemmt wird, was den Vorteil einer guten Zentrierung des fixierten Einsatzwerkzeugs (z. B. Bohrnadel) bietet. Höhere Spannkräfte können durch Zahnkranz-Bohrfutter erreicht werden, die mit Hilfe eines Bohrfutterschlüssels gespannt werden. Ferner sind Bohrfutter für Steinbohrer an Bohrhämmern bekannt, die das Werkzeug nicht durch Kraftschluss spannen, sondern das Drehmoment mittels Formschluss übertragen und so eine axiale Bewegung des Werkzeugs erlauben.

Ebenfalls spezielle Bohrfutter werden bei Vorrichtungen zur Bohrwiderstandsmessung eingesetzt. Mit solchen Bohrwiderstandsmessgeräten, die eine dünne Bohrnadel verwenden, können Objekte, in die eine solche Nadel hineinbohren kann, im Inneren auf Ihren Zustand oder ihre Qualität untersucht werden, ohne das Objekt zu zerstören oder wesentlich zu beschädigen. Die Bohrnadel muss regelmäßig ausgetauscht werden, um verlässliche Messwerte zu liefern.

Um das Austauschen zu vereinfachen, offenbart DE 10 2011 103 636 A1 eine Nadel-Wechselkartusche und ein Bohrmessgerät, das mit dieser Nadel-Wechselkartusche ausgestattet ist. Dabei wird die Bohrnadel an einem Ende eines Teleskoprohrs drehfest gehalten, während am entgegen gesetzten Ende des Teleskoprohrs eine Andockvorrichtung angeordnet ist, mit der das Teleskoprohr und damit die Bohrnadel mit einem Antrieb gekoppelt wird. Diese Andockvorrichtung verfügt über eine Magnethalterung, die lösbar mit dem Andock-Ende des Teleskoprohrs verbunden ist, und über eine Kupplungsvorrichtung wie eine Klauenkupplung, Rastkupplung oder ein Bajonettverschluss, um das Drehmoment von der Antriebsvorrichtung des Bohrmessgeräts auf das Teleskoprohr zu übertragen. Die als Hohlzylinder ausgeführte Magnethalterung fungiert als eine Art Bohrfutter und dient der axialen Zentrierung des Teleskoprohrs, damit die Bohrnadel mit der Antriebsachse fluchtet. DE10 2011 103 636 A1 offenbart somit ein Bohrfutter mit den Merkmalen des Oberbegriffs des unabhängigen Anspruchs 1.

Üblicherweise sind Bohrnadeln an ihrem Befestigungsabschnitt mit einer Klemmmechanik oder einem Gewinde ausgestattet, um mit der Bohrnadelaufnahme verschraubt zu werden. Daher können die Bohrnadeln nur in einer Richtung gedreht werden, ohne sich zu lösen. Ferner treten gerade im Bereich der Bohrnadelaufnahme vermehrt Brüche der Bohrnadel auf.

Das Einspannen einer Bohrnadel mit mehreren Klemmkörpern an sich wird in der DE 100 31 339 A1 adressiert.

Ausgehend von diesem Stand der Technik liegt der vorliegenden Erfindung die Aufgabe zu Grunde, ein verbessertes Bohrfutter bereitzustellen, das das Betreiben einer Bohrnadel in beiden Drehrichtungen (lösen und bohren) gestattet und das Auftreten von Nadelbrüchen verringert.

Diese Aufgabe wird durch eine Vorrichtung mit den Merkmalen des unabhängigen Anspruchs 1 gelöst.

Ferner wird durch die Bohrnadel-Bohrfutter-Anordnung mit den Merkmalen des Anspruchs 8 eine Vorrichtung bereitgestellt, die die Vorteile des Bohrfutters und der Bohrnadel kombiniert.

Bevorzugte Weiterbildungen werden durch die Unteransprüche beschrieben.

Ein erfindungsgemäßes Bohrfutter weist neben einer Bohrnadelaufnahmevorrichtung, in der eine Bohrnadel lösbar aufgenommen werden kann, eine hohlzylindrische Magnethalterung für die Bohrnadelaufnahmevorrichtung und eine Kupplungsvorrichtung zur Drehmomentübertragung von einer Antriebsvorrichtung auf die Bohrnadelaufnahmevorrichtung auf.

Erfindungsgemäß ist die Bohrnadelaufnahmevorrichtung zur Aufnahme einer Bohrnadel ausgestaltet, die anstelle eines Gewindes einen abgeflachten Endabschnitt aufweist, mit dem die Bohrnadel in der Bohrnadelaufnahmevorrichtung aufgenommen ist. Durch die plane Fläche ist die Bohrnadel in der Bohrnadelaufnahme gegen Schlupf gesichert. Die Bohrnadelaufnahmevorrichtung weist zur Aufnahme des abgeflachten Bohrnadelendes ein Aufnahmeelement, und zumindest einen Klemmkörper und einen Klemmeinsatz auf. Das Aufnahmeelement hat zumindest einen zylindrischen Abschnitt, in dem sich eine Ausnehmung befindet, die sich in die Stirnfläche des zylindrischen Abschnitts öffnet. Der Klemmeinsatz weist einen oder mehrere Gegenformkörper auf, die den oder die Klemmkörper ergänzen und sich von einer Anschlagscheibe erstrecken, die an der Stirnfläche des zylindrischen Abschnitts zur Anlage kommt, wenn der oder die Gegenformkörper zusammen mit den Klemmkörpern in der Ausnehmung des Aufnahmeelements aufgenommen sind. Damit die Bohrnadel durch den Klemmeinsatz in die Ausnehmung des Aufnahmeelements geführt werden kann, weist die Anschlagscheibe des Klemmeinsatzes eine Durchtrittsöffnung für die Bohrnadel auf. Der oder die Gegenformkörper des Klemmeinsatzes und der oder die Klemmkörper sind in Abmessungen und Form derart ausgebildet, dass der abgeflachte Endabschnitt der Bohrnadel zwischen dem oder den Klemmkörpern und dem oder den Gegenformkörpern klemmend aufgenommen wird.

Um die durch den abgeflachten Endabschnitt der Bohrnadel bei Rotation entstehende Unwucht auszugleichen bzw. tolerierbar zu halten, so dass die co-zentrische Anordnung der Bohrnadel und einer Abtriebswelle der Antriebsvorrichtung nicht beeinträchtigt wird, d. h. die Bohrnadel und die Motorabtriebswelle zentrisch verlaufen, wird erfindungsgemäß die Kupplungsvorrichtung des Bohrfutters als Magnetkupplung ausgeführt. Dabei weist die Bohrnadelaufnahmevorrichtung einen ersten Kupplungspartner mit einer Magnetkupplungsscheibe auf, die mit einer Magnetkupplungsscheibe eines antriebsseitigen Kupplungspartners kontaktfrei in Wirkverbindung gebracht wird, wenn das Bohrfutter mit der Antriebsvorrichtung gekoppelt wird. Zudem wird die hohlzylindrische Magnethalterung durch einen Ringmagnet gebildet, der beabstandet und kontaktfrei koaxial um den zylindrischen Abschnitt des Aufnahmeelements angeordnet ist. Damit die Magnethalterung auf das Aufnahmeelement wirken kann, wird dieses an dem zylindrischen Abschnitt von einem magnetisch beeinflussbaren Distanzring umgeben.

Die kontaktfreie Magnetkupplung der Bohrnadelaufnahmevorrichtung mit der Antriebsvorrichtung und die kontaktfreie Anordnung des Aufnahmeelements in dem Bohrfutter gestatten die unwuchtige Rotation des Aufnahmeelements, in dem der Endabschnitt aufgenommen ist, wobei jeweils einer der Klemmkörper in dem aus den Gegenformkörpern des Klemmeinsatzes gebildeten Käfig die Klemmung der Bohrnadel übernimmt, je nach dem, wo die Unwucht gerade auftritt.

Zwar ist denkbar, dass die Bohrnadelaufnahmevorrichtung mit nur einem oder zwei Klemmkörpern und ergänzend dazu einem oder zwei Gegenformkörpern am Klemmeinsatz gestaltet ist; um aber einen sehr guten Rundlauf zu erhalten, weist die Bohrnadelaufnahmevorrichtung bevorzugt drei Klemmkörper oder Klemmkörperpaarungen und entsprechend auch drei Gegenformkörper am Klemmeinsatz auf. Die Klemmkörper können zylindrisch ausgebildet und die Gegenformkörper die Lücken zwischen den Klemmkörpern ausfüllend geformt sein. Alternativ können die Klemmkörper kugelförmig ausgebildet sein, wobei jeweils Paare aus kugelförmigen Klemmkörpern durch die Gegenformkörper des Klemmeinsatzes ergänzt werden. Die umfängliche Wandung der Ausnehmung in dem Aufnahmeelement, in der die Klemmkörper und die ergänzenden Gegenformkörper angeordnet sind, kann entsprechend der Anzahl der Klemmkörper segmentiert geformt sein. Um die zwischen den Klemmkörpern aufgenommene Bohrnadel mit den Gegenformkörpern in der Ausnehmung in eine drehfeste Lage bringen zu können, erstreckt sich jedes Wandsegment einer Spirallinie folgend von einem in Bezug zu der zwischen den Klemmkörpern aufnehmbaren Bohrnadel proximalen zu einem distalen Segmentabschnitt, wobei jeder Übergang zwischen dem proximalen und dem distalen Segmentabschnitt benachbarter Wandsegmente einen Anschlag bildet, der in die Ausnehmung ragt. So kann die Bohrnadel zwischen den Klemmkörpern festgeklemmt werden, wenn diese in der Ausnehmung zu den proximalen Segmentabschnitten bewegt werden, und der Klemmeingriff wird gelöst, indem die Klemmkörper zu den distalen Segmentabschnitten bewegt werden.

Zur Verbindung des ersten Kupplungspartners mit dem Aufnahmeelement kann die Magnetkupplungsscheibe mit einem Hohlzylinderabschnitt verbunden sein, in dem ein Zapfenabschnitt des Aufnahmeelements, der sich an den zylindrischen Abschnitt anschließt, aufgenommen ist. Der Zapfenabschnitt ist drehfest mit dem Hohlzylinderabschnitt verbunden, so dass die Drehmomentübertragung von der Magnetkupplungsscheibe auf die Bohrnadel erfolgen kann. Gegebenenfalls können der Zapfenabschnitt und der Hohlzylinderabschnitt einen von einem kreisrunden Querschnitt abweichenden Querschnitt aufweisen und somit durch Formschluss miteinander verbunden sein. Alternativ oder zusätzlich können Befestigungsmittel wie Stifte oder Schrauben eingesetzt werden. Selbstverständlich kann in umgekehrter Weise auch der Kupplungspartner einen Zapfenabschnitt aufweisen, der in einem hohlzylindrischen Abschnitt des Aufnahmeelements angeordnet ist. Auch sind weitere form- und/oder kraftschlüssige Verbindungen denkbar.

Das erfindungsgemäße Bohrfutter kann ferner eine Frontabdeckung, die mit einer Öffnung für die Bohrnadel versehen ist, und einen mit der Frontabdeckung lösbar verbindbaren oder unlösbar verbundenen Gehäuseabschnitt aufweisen, der seinerseits lösbar mit einem die antriebsseitige Magnetkupplungsscheibe umgebenden Gehäusesegment verbunden ist. Die hohlzylindrische Magnethalterung, d. h. der Ringmagnet, ist vorzugsweise an der Innenwandung des Gehäuseabschnitts angeordnet, korrespondierend zur Lage des zylindrischen Abschnitts des Aufnahmeelements, um dieses zentrisch zu führen, jedoch durch die Kontaktfreiheit gewisse exzentrische Versätze infolge der unwuchtigen Rotation zuzulassen.

Um die co-zentrische Anordnung der Bohrnadel mit der Abtriebswelle bei Kopplung des Bohrfutters mit der Antriebsvorrichtung sicherzustellen, kann das Bohrfutter eine Bohrnadelführungsvorrichtung aufweisen, die eine Zentrier- bzw. Führungshülse umfasst, die in der Öffnung der Frontabdeckung drehbar gelagert ist.

Vorteilhaft kann bei dem erfindungsgemäßen Bohrfutter das übertragbare Drehmoment den Anforderungen angepasst werden, indem eine Distanz zwischen den Magnetkupplungsscheiben zur Variation des übertragenen Drehmoments einstellbar ist.

Diese Einstellbarkeit der Distanz kann durch eine axiale Verstellbarkeit des Gehäuseabschnitts gegenüber dem Gehäusesegment bereitgestellt werden.

Die Bohrnadel ist an dem Abschnitt, der zur Aufnahme in dem Bohrfutter vorgesehen ist, einseitig abgeflacht, wodurch sie im Bohrfutter gegen Schlupf gesichert ist.

Vorteilhaft neigt diese Bohrnadel mit dem abgeflachten Endabschnitt anstelle eines Gewindes weniger zu Nadelbrüchen. Dies ist darauf zurückzuführen, dass bei gleichem Durchmesser der Bohrnadel der Querschnitt am abgeflachten Ende größer ist der Kerndurchmesser des Gewindes einer vergleichbaren Bohrnadel.

Geeignete Bohrnadeln haben in Querschnittsabmessungen rechtwinklig zu der Abflachung des Endabschnitts, die höchstens 5 % kleiner als der Durchmesser der Bohrnadel sind.

Eine Anordnung aus dem erfindungsgemäßen Bohrfutter und der in der Bohrnadelaufnahmevorrichtung des Bohrfutters aufgenommenen Bohrnadel verbindet die genannten Vorteile.

Weitere Vorteile werden durch die nachfolgende Beschreibung unter Bezug auf die begleitenden Figuren dargelegt. Der Bezug auf die Figuren in der Beschreibung dient dem erleichterten Verständnis des Gegenstands. Gegenstände oder Teile von Gegenständen, die im Wesentlichen gleich oder ähnlich sind, können mit denselben

Bezugszeichen versehen sein. Die Figuren sind lediglich schematische Darstellungen von Ausführungsbeispielen der Erfindung. Es zeigt:
**Fig. 1** einen Längsschnitt durch ein erfindungsgemäßes Bohrfutter mit eingespannter Bohrnadel,
**Fig. 2** eine perspektivische Ansicht des erfindungsgemäßen Bohrfutters mit eingespannter Bohrnadel,
**Fig. 3** eine perspektivische Explosionsansicht des erfindungsgemäßen Bohrnadel-Bohrfutters,
**Fig. 4**eine perspektivische Explosionsansicht eines Teils der Komponenten des erfindungsgemäßen Bohrnadel-Bohrfutters,
**Fig. 5** eine perspektivische Detailansicht der Bohrnadelaufnahmevorrichtung des erfindungsgemäßen Bohrfutters,
**Fig. 6** eine Draufsicht auf das Aufnahmeelement mit zwischen den Klemmkörpern aufgenommener Bohrnadel,
**Fig. 7** eine Detailansicht des zwischen den Klemmkörpern aufgenommenen Bohrnadelabschnitts,
**Fig. 8** eine perspektivische Ansicht des Aufnahmeelements mit zwischen den Klemmkörpern aufgenommener Bohrnadel,
**Fig. 9** eine perspektivische Ansicht des Teils der Bohrnadel mit dem abgeflachten Abschnitt,
**Fig. 10** eine perspektivische Detailansicht (ohne Gehäuse und Magnetkupplung) der Bohrnadelaufnahmevorrichtung des erfindungsgemäßen Bohrfutters mit alternativen Klemmkörpern.

In den Figuren ist eine beispielhafte Ausführungsform der erfindungsgemäßen Bohrnadel-Bohrfutter-Anordnung gezeigt, der Schutzumfang ist jedoch nicht darauf beschränkt. So sind andere Gehäuselösungen und Varianten der Magnetkupplung bzw. der Verbindung der Kupplungsscheiben mit Abtriebswelle und Aufnahmeelement denkbar, ohne den Schutzumfang der Erfindung zu verlassen.

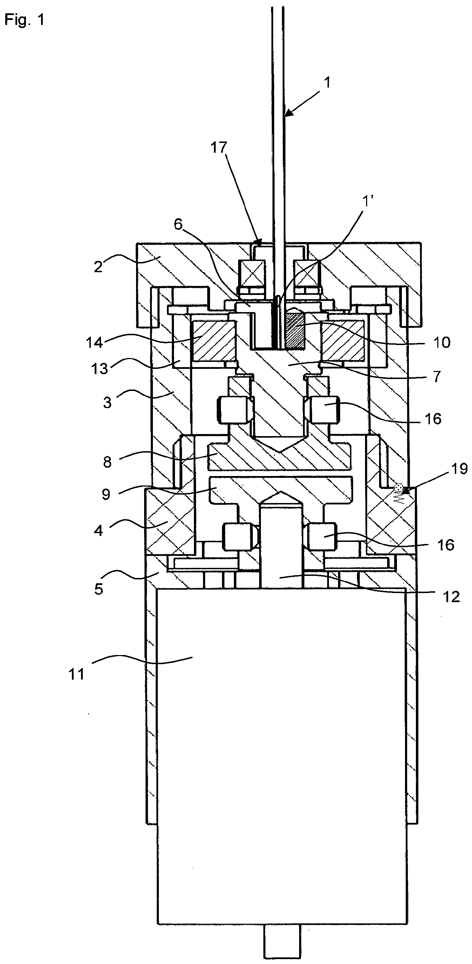

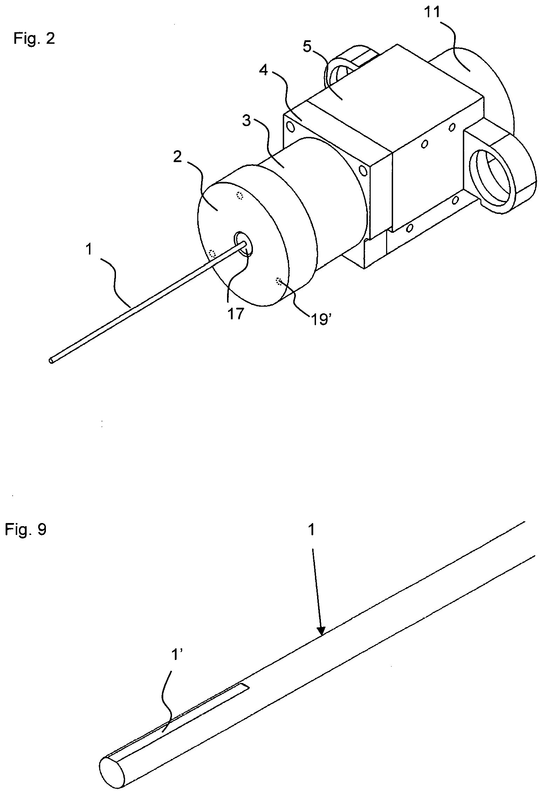

Die in **Fig. 1** gezeigte Bohrnadel-Bohrfutter-Anordnung umfasst die mit dem Motor 11 verbundene Motorabtriebswelle 12 und die antriebsseitige Kupplungsscheibe 9 der Magnetkupplung. Das den antriebsseitigen Kupplungspartner 9 umgebende Gehäusesegment 4 ist mit dem Motorgehäuse 5 verbunden. Die Motorabtriebswelle 12 ist zur Drehmomentübertragung kontaktfrei über die Magnetkupplung 8,9 mit der Bohrnadelaufnahme bzw. dem Aufnahmeelement 7 verbunden, in dem der abgeflachte Endabschnitt 1' der Bohrnadel 1 durch die Klemmkörper 10 und den Klemmeinsatz 6 eingeklemmt ist. Die weniger zu Nadelbrüchen neigende erfindungsgemäße Bohrnadel 1 mit abgeflachtem Endabschnitt 1' ist auch in **Fig. 9** zu sehen. Die Querschnittsabmessung der Bohrnadel 1 rechtwinklig zu der Abflachung des Endabschnitts 1' ist höchstens 5 %, bevorzugt 3 % kleiner als der Durchmesser der Bohrnadel 1.

Das Aufnahmeelement 7 wird radial ebenfalls kontaktfrei von einem Ringmagnet 13, der an der Innenwand des Gehäuseabschnitts 3 sitzt, gehalten. Dazu umgibt ein magnetisch beeinflussbarer Distanzring 14 das Aufnahmeelement 7. Durch die kontaktfreie radiale Führung und die kontaktfreie Kopplung mit der Abtriebswelle 12 kann die infolge des abgeflachten Endes 1' der Bohrnadel 1 auftretende Unwucht an dem Aufnahmeelement 7 bei Rotation der Bohrnadel 1 ausgeglichen bzw. toleriert werden. Die Bohrnadel 1 wird durch die Führungshülse 17, die in der Durchtrittsöffnung der Frontabdeckung 2 gelagert ist, axial zentriert und verläuft damit co-zentrisch mit der Motorabtriebswelle 12, unabhängig von den an dem Aufnahmeelement 7 auftretenden exzentrischen Versätzen infolge der Unwucht.

Die hier gezeigte Frontabdeckung 2 weist an einer umfänglichen Innenwand ein Gewinde auf, mit dem sie mit dem Gehäuseabschnitt 3, der außenumfänglich ein entsprechendes Gewinde aufweist, verschraubt werden kann. Alternativ kann die Frontabdeckung 2 auch unlösbar mit dem Gehäuseabschnitt 3 verbunden, beispielsweise verklebt sein. Hingegen ist der Gehäuseabschnitt 3 lösbar mit dem Gehäusesegment 4 verbunden. Für diese Verbindung kann wie im dargestellten Beispiel ein Gewinde an einem innenumfänglichen Abschnitt des Gehäuseabschnitts 3 und an einem Außenumfang des Gehäusesegments 4 vorgesehen sein. Selbstverständlich sind auch andere Ausführungen der Gehäusekomponenten denkbar. Zur Verstellung der axialen Distanz zwischen den Kupplungspartnern 8,9 kann einfach die Verschraubungstiefe zwischen Gehäuseabschnitt 3 und Gehäusesegment 4 variiert werden, was händisch oder automatisiert mit entsprechenden Stellmitteln erfolgen kann, oder es kann beispielsweise auch ein Gehäuseabschnitt 3 mit einer anderen Länge eingesetzt werden. Ferner kann zwischen dem Gehäuseabschnitt 3 und dem Gehäusesegment 4 eine Rastmechanik 19 zur Verstellung der Übertragungsdrehmomente vorgesehen sein, wie durch die gepunktete Darstellung in **Fig. 1** angedeutet wird. Weitere Alternativen zur Einstellung der axialen Distanz zwischen den Kupplungspartnern 8,9 liegen in einer axial verstellbaren Verbindung eines oder beider Kupplungspartner 8,9 an dem Aufnahmeelement 7 und/oder der Abtriebswelle 12.

So kann auch bei Wechsel des Bohrfutters, wofür der mit der Frontabdeckung 2 verbundene Gehäuseabschnitt 3 von dem Gehäusesegment 4 gelöst wird, durch Einstellung des Abstands der beiden Kupplungspartner 8,9 das gleiche Übertragungsdrehmoment beibehalten werden.

Die Verbindungen von Aufnahmeelement 7 und Motorabtriebswelle 12 mit den jeweiligen Kupplungspartnern 8,9 erfolgen über Befestigungsstifte 16, die die hohlzylindrischen Abschnitte der Kupplungspartner 8,9 an den darin aufgenommenen Abschnitten des Aufnahmeelements 7 bzw. der Motorabtriebswelle 12 festlegen.

**Fig. 2** zeigt die Bohrnadel-Bohrfutter-Anordnung von außen mit der in der Führungshülse durch die Durchtrittsöffnung in der Frontabdeckung 2 geführten Bohrnadel 1, die über den Gehäuseabschnitt 3 mit dem abtriebswellenseitigen Gehäusesegment 4 verbunden ist. Das Gehäusesegment 4 und das Motorgehäuse 5 können beispielsweise mittels Schrauben oder Stiften miteinander verbunden sein. Ferner sind hier in der Frontabdeckung 2 Stellpositionen 19' gepunktet angedeutet, an denen jeweils eine Rastmechanik 19, wie in **Fig. 1** angedeutet, zur Einstellung des Übertragungsdrehmoments verstellt werden kann.

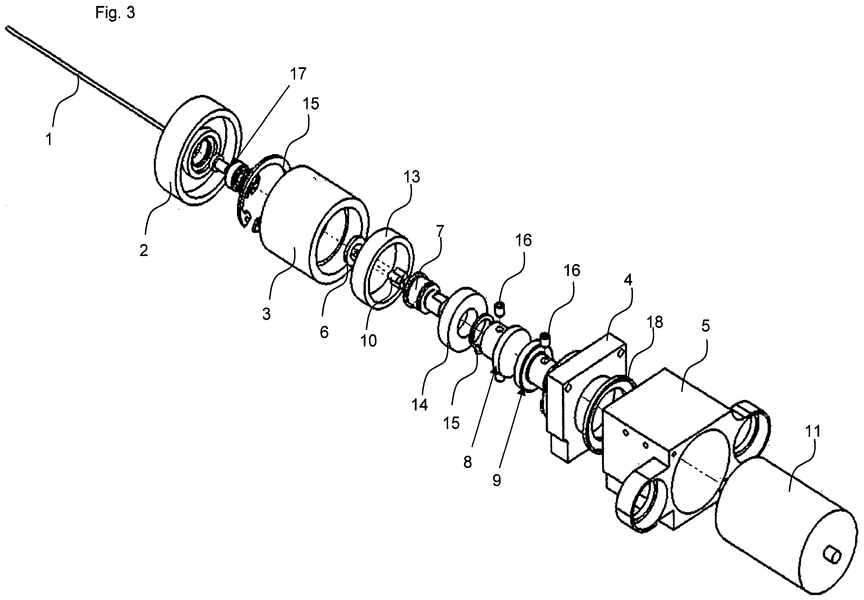

Die Explosionsansicht der erfindungsgemäßen Bohrnadel-Bohrfutter-Anordnung in **Fig. 3** verdeutlicht die Anordnung der einzelnen Komponenten aus **Fig. 1****.** Zusätzlich sind hier Fixierringe 15, die der axialen Fixierung der einzelnen Komponenten wie des Magnetrings 13 in dem Gehäuseabschnitt 3, des Distanzrings 14 auf dem zylindrischen Abschnitt des Aufnahmeelements 7 dienen, und der Dichtungsring 18 zwischen Gehäusesegment 4 und Motorgehäuse 5 bezeichnet.

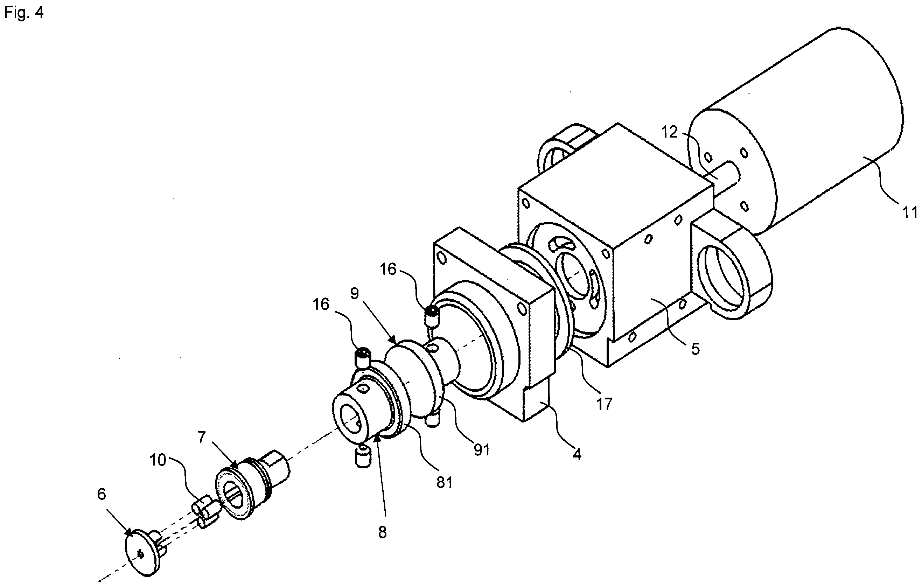

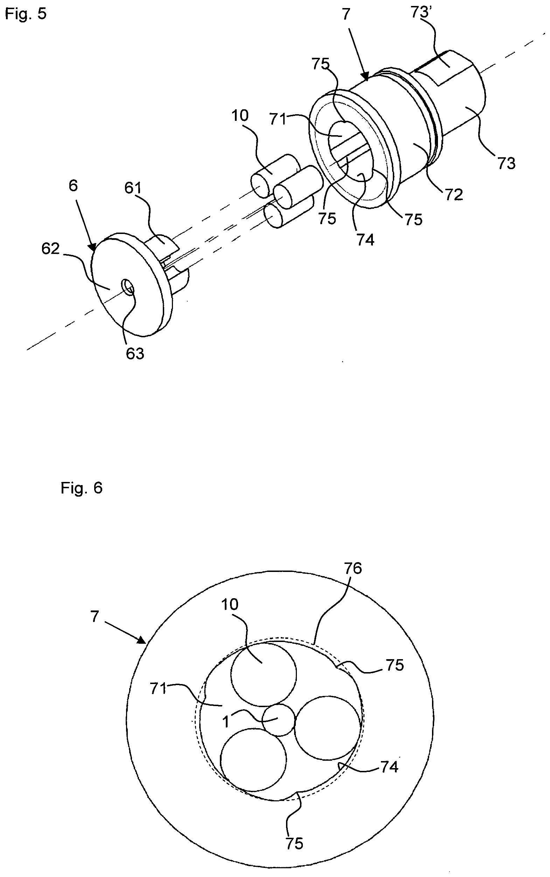

**Fig. 4** und **Fig. 5** zeigen Details der erfindungsgemäßen Bohrfutter-Bohrnadel-Anordnung, insbesondere die Kupplungspartner 8,9 in **Fig. 4** und die Bohrnadelaufnahmevorrichtung in **Fig. 5****.** Dort ist das Aufnahmeelement 7 mit dem zylindrischen Abschnitt 72, der die Ausnehmung 71 aufweist, und mit dem Zapfenabschnitt 73 gezeigt, der mit dem hohlzylindrischen Abschnitt des ersten Kupplungspartners 8 verbunden wird. Der Zapfenabschnitt 73 weist zum verbesserten Eingriff der Befestigungsstifte 16 eine Abflachung 73' auf.

Zur Positionierung des Distanzrings 14 (nicht in **Fig. 4**, **5** dargestellt) an dem zylindrischen Abschnitt 72 weist das Aufnahmeelement 7 einen Anschlagsring auf, der durch die überkragende Stirnfläche gebildet wird. Die Wandung der Ausnehmung 71 ist entsprechend den drei Gegenformkörpern 61 des Klemmeinsatzes 6, die die drei Klemmkörper 10 ergänzen, in drei Segmente 74 unterteilt, die durch nach innen weisende Anschläge 75 begrenzt werden.
Die Anschlagscheibe 62, mit der der Klemmeinsatz 6 an der Stirnfläche des zylindrischen Abschnitts 72 des Aufnahmeelements 7 zur Anlage kommt, weist eine zentrische Durchtrittsöffnung 63 für die Bohrnadel auf, die mit ihrem abgeflachten Endabschnitt zwischen den Klemmkörpern 10 und den Gegenformkörpern 61 in der Ausnehmung 71 geklemmt wird.

**Fig. 6** verdeutlicht die Gestaltung der Wandsegmente 74, die von einem zentrischen Kreisprofil 76 abweichen. Jedes Wandsegment 74 entspricht einem Abschnitt einer Spirallinie um die Bohrnadel 1, wobei die Anschläge 75 jeweils den Übergang zwischen einem proximalen und distalen Segmentabschnitt benachbarter Segmente 74 bilden. Werden die Klemmkörper 10 in die distalen Segmentabschnitte bewegt, wird deren Abstand zu der Bohrnadel 1 vergrößert und der Klemmeingriff gelöst. Umgekehrt wird die Bohrnadel 1 zwischen den Klemmkörpern 10 geklemmt, wenn diese in Richtung proximaler Segmentabschnitte bewegt werden.

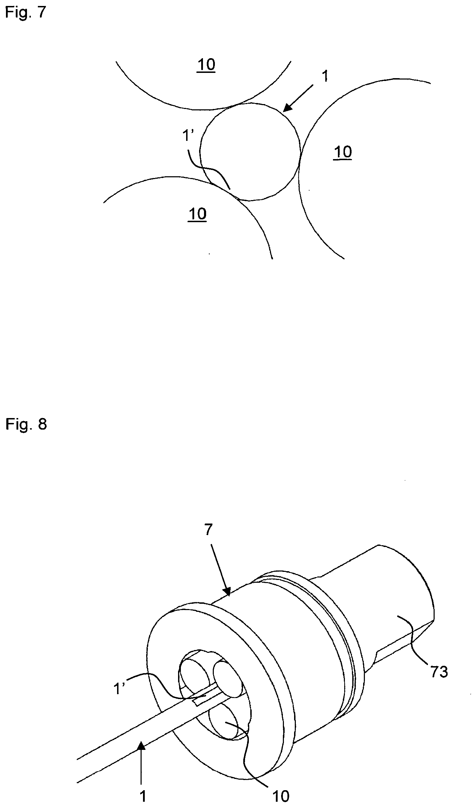

Die Klemmung der Bohrnadel 1 mit dem abgeflachten Endabschnitt 1' zwischen den Klemmkörpern 10 ist in **Fig. 7** detailliert gezeigt. An einem der Klemmkörper 10 kommt der abgeflachte Abschnitt 1' zur Anlage, wodurch die gewisse exzentrische Anordnung der Bohrnadel 1 in dem Aufnahmeelement 7 (siehe auch **Fig. 8**) zustande kommt.

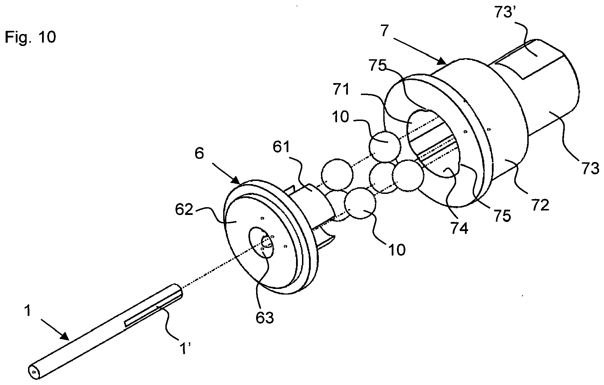

In **Fig. 10** ist in einer Teilansicht ohne Gehäuse und Magnetkupplung eine erfindungsgemäße Bohrnadelaufnahmevorrichtung mit alternativen Klemmkörpern 10 zu sehen. Dort sind als Klemmkörper 10 Kugeln vorgesehen, die paarweise zwischen den Gegenformkörpern 61 des Klemmeinsatzes 6 aufgenommen sind. Der Klemmeinsatz 6 und das Aufnahmeelement 7 entsprechen weithingehend dem in **Fig. 5** gezeigten Beispiel mit den zylindrischen Klemmkörpern.

Wie aus **Fig. 10** ersichtlich wird, werden die kugelförmigen Klemmkörper 10 paarweise so angeordnet, dass sie die zylindrischen Klemmkörper 10 aus den **Figuren 1 bis 5** **und** **8** ersetzen, d. h. die beiden benachbart angeordneten Kugeln eines Klemmkörperpaars definieren eine Achse, die parallel zu der Bohrnadelachse ist.

Es soll allerdings darauf hingewiesen werden, dass die in den Figuren gezeigten Beispiele in Bezug auf Anzahl und Form der Klemmkörper, Gegenformkörper und Segmente in der Ausnehmung des Aufnahmeelements in keiner Weise beschränkend zu verstehen sind. So können auch mehr als zwei kugelförmige Klemmkörper einen zylindrischen Klemmkörper ersetzen. Ferner ist, obwohl nicht bevorzugt, erfindungsgemäß umfasst, dass Klemmkörper und Gegenformkörper anders als zylindrisch oder kugelförmig geformt sind oder mehr als drei zylindrische Klemmkörper bzw. mehr als drei Paare kugelförmiger Klemmkörper mit entsprechender Anzahl an Gegenformkörpern und ausgeformten Segmenten in der Ausnehmung des Aufnahmeelements eingesetzt werden können, um die Bohrnadel zu klemmen.

| | | | |
|---|---|---|---|
| 1 | Bohrnadel | 8 | bohrnadelseitiger Kupplungspartner |
| 1' | abgeflachter Endabschnitt | 81 | Magnetkupplungsscheibe |
| 2 | Frontabdeckung | 9 | antriebsseitiger Kupplungspartner |
| 3 | Gehäuseabschnitt | 91 | Magnetkupplungsscheibe |
| 4 | Gehäusesegment | 10 | Klemmkörper |
| 5 | Motorgehäuse | 11 | Motor |
| 6 | Klemmeinsatz | 12 | Abtriebswelle |
| 61 | Gegenformkörper | 13 | Ringmagnet |
| 62 | Anschlagscheibe | 13' | Anschlaghülse |
| 63 | Durchtrittsöffnung | 14 | Magnetisch beeinflussbarer Distanzring |
| 7 | Aufnahmeelement | 14' | Lager |
| 71 | Ausnehmung | 15 | Fixierring |
| 72 | zylindrischer Abschnitt | 16 | Befestigungsstift |
| 73 | Zapfen | 17 | Bohrnadelführungsvorrichtung |
| 73' | Abflachung | 17' | Scheibe |
| 74 | Wandsegment | 18 | Dichtungsring |
| 75 | Anschlag | 19 | Rastmechanik |
| 76 | gedachtes Kreisprofil | | |

## Patentansprüche

1. Bohrfutter, das
- eine Bohrnadelaufnahmevorrichtung zur lösbaren Aufnahme einer Bohrnadel (1) mit abgeflachtem Endabschnitt (1'),
- eine hohlzylindrische Magnethalterung für die Bohrnadelaufnahmevorrichtung und
- eine Kupplungsvorrichtung zur Drehmomentübertragung von einer Antriebsvorrichtung auf die Bohrnadelaufnahmevorrichtung
aufweist,
**dadurch gekennzeichnet, dass**
die Bohrnadelaufnahmevorrichtung zur Aufnahme eines abgeflachten Endabschnitts (1') der Bohrnadel (1) ausgebildet ist und ein Aufnahmeelement (7), zumindest einen Klemmkörper (10) und einen Klemmeinsatz (6) aufweist, wobei
- das Aufnahmeelement (7) zumindest einen zylindrischen Abschnitt (72) mit einer Ausnehmung (71) aufweist, und
- der Klemmeinsatz (6) Gegenformkörper (61) aufweist, der oder die den zumindest einen Klemmkörper (10) ergänzt/ergänzen, und der oder die sich von einer Anschlagscheibe (62) weg erstreckt/erstrecken,
und wobei die Anschlagscheibe (62) an einer Stirnfläche des zylindrischen Abschnitts (72) anliegt und die eine Durchtrittsöffnung (63) für die Bohrnadel (1) aufweist,
wobei der oder die Gegenformkörper (61) und der zumindest eine Klemmkörper (10) in der Ausnehmung (71) angeordnet sind und den abgeflachten Endabschnitt (1') der Bohrnadel (1) zwischen dem oder den Klemmkörper(n) (10) und den Gegenformkörpern (61) klemmend aufnehmen können, und die Kupplungsvorrichtung eine Magnetkupplung ist, wobei die Bohrnadelaufnahmevorrichtung einen ersten Kupplungspartner (8) mit einer Magnetkupplungsscheibe (81) aufweist, die mit einer Magnetkupplungsscheibe (91) eines antriebsseitigen Kupplungspartners (9) kontaktfrei in Wirkverbindung bringbar ist, und
ein Ringmagnet (13) die hohlzylindrische Magnethalterung bildet und beabstandet und kontaktfrei koaxial um den zylindrischen Abschnitt (72) des Aufnahmeelements (7) angeordnet ist, und ein magnetisch beeinflussbarer Distanzring (14) den zylindrischen Abschnitt (72) umgibt.

2. Bohrfutter nach Anspruch 1, **dadurch gekennzeichnet, dass** der eine oder die mehreren, bevorzugt drei, Klemmkörper (10) bevorzugt zylindrisch ausgebildet sind, und wobei eine umfängliche Wandung der Ausnehmung (71) entsprechend der Anzahl der zylindrischen Klemmkörper (10) segmentiert ist, oder dass
der eine oder die mehreren, bevorzugt sechs, Klemmkörper (10) bevorzugt kugelförmig ausgebildet sind, die jeweils paarweise die Gegenformkörper (61) des Klemmeinsatzes ergänzen, und wobei eine umfängliche Wandung der Ausnehmung (71) entsprechend der Anzahl der Paare aus kugelförmigen Klemmkörpern (10) segmentiert ist,
wobei sich jedes Wandsegment (74) einer Spirallinie folgend von einem in Bezug zu der zwischen den Klemmkörpern (10) aufnehmbaren Bohrnadel (1) proximalen zu einem distalen Segmentabschnitt erstreckt, und wobei jeder Übergang zwischen dem proximalen und dem distalen Segmentabschnitt benachbarter Wandsegmente (74) einen Anschlag (75) bildet, der in die Ausnehmung (71) ragt.

3. Bohrfutter nach zumindest einem der Ansprüche 1 und 2, **dadurch gekennzeichnet, dass**
der der Bohrnadelaufnahmevorrichtung zugeordnete Kupplungspartner (8) einen Hohlzylinderabschnitt aufweist, der mit der Magnetkupplungsscheibe (81) verbunden ist und in dem ein Zapfenabschnitt (73) des Aufnahmeelements (7) aufgenommen und drehfest damit verbunden ist.

4. Bohrfutter nach zumindest einem der Ansprüche 1 bis 3, **dadurch gekennzeichnet, dass**
das Bohrfutter eine Frontabdeckung (2) mit einer Öffnung für die Bohrnadel (1) und einen mit der Frontabdeckung (2) lösbar verbindbaren oder unlösbar verbundenen Gehäuseabschnitt (3) aufweist, der lösbar mit einem den antriebsseitigen Kupplungspartner (9) umgebenden Gehäusesegment (4) verbunden ist, wobei die hohlzylindrische Magnethalterung an der Innenwandung des Gehäuseabschnitts (3) angeordnet ist.

5. Bohrfutter nach zumindest einem der Ansprüche 1 bis 4, **dadurch gekennzeichnet, dass**
das Bohrfutter eine Bohrnadelführungsvorrichtung (17) aufweist, die eine Bohrnadel-Führungshülse umfasst, die in der Öffnung der Frontabdeckung (2) drehbar gelagert ist, so dass die in der Bohrnadelführungsvorrichtung (17) geführte Bohrnadel (1) bei Kopplung des Bohrfutters mit der Antriebsvorrichtung co-zentrisch mit einer Motorabtriebswelle (12) der Antriebsvorrichtung positioniert ist.

6. Bohrfutter nach zumindest einem der Ansprüche 3 bis 5, **dadurch gekennzeichnet, dass**
eine Distanz zwischen den Magnetkupplungsscheiben (81,91) zur Variation des übertragenen Drehmoments einstellbar ist.

7. Bohrfutter nach Anspruch 6, **dadurch gekennzeichnet, dass** die einstellbare Distanz durch eine axiale Verstellbarkeit des Gehäuseabschnitts (3) gegenüber dem Gehäusesegment (4) bereitgestellt wird.

8. Bohrnadel-Bohrfutter-Anordnung, die ein Bohrfutter nach zumindest einem der Ansprüche 1 bis 7 und eine Bohrnadel (1) aufweist, wobei die Bohrnadel (1) einen einseitig abgeflachten Endabschnitt (1') aufweist, der in der Bohrnadelaufnahmevorrichtung des Bohrfutters aufgenommen ist, und wobei eine Querschnittsabmessung der Bohrnadel (1) rechtwinklig zu der Abflachung des Endabschnitts (1') höchstens 5 %, bevorzugt um 3 % kleiner als ein Durchmesser der Bohrnadel (1) ist.

## Claims

1. Drill chuck comprising
- a drilling needle receiving device for releasably receiving a drilling needle (1) with flattened end section (1'),
- a hollow cylindrical magnetic holder for the drilling needle receiving device, and
- a coupling device for torque transmission from a drive device to the drilling needle receiving device,
**characterized in that**
the drilling needle receiving device is configured for receiving a flattened end section (1') of the drilling needle (1) and comprises a receiving element (7), at least one clamping body (10), and a clamping insert (6), wherein
- the receiving element (7) comprises at least one cylindrical section (72) with a recess (71), and
- the clamping insert (6) comprises counter bodies (61) that supplements or supplement the at least one clamping body (10) and that extends or extend away from a stop disk (62),
and wherein the stop disk (62) is resting on an end face of the cylindrical section (72) and comprises a through opening (63) for the drilling needle (1),
wherein the counter body or counter bodies (61) and the at least one clamping body (10) are configured in regard to dimensions and shape for arrangement in the recess (71) and for providing a clamping receiving action of the flattened end section (1') of the drilling needle (1) between the clamping body or clamping bodies (10) and the counter bodies (61), and
the coupling device is a magnetic coupling device wherein the drilling needle receiving device comprises a first coupling partner (8) with a magnetic coupling disk (81) which is configured to be brought into operative engagement with a magnetic coupling disk (91) of a drive-associated coupling partner (9) in a contactless way, and
an annular magnet (13) forms the hollow cylindrical magnetic holder and is arranged spaced apart and coaxially without contact about the cylindrical section (72) of the receiving element (7), wherein preferably a magnetically affectable spacer ring (14) surrounds the cylindrical section (72).

2. Drill chuck according to claim 1, **characterized in that** said one or the plurality of, preferably three, clamping bodies (10) are preferably designed cylindrically and wherein a circumferential wall of the recess (71) is segmented in accordance with the number of cylindrical clamping bodies (10), or **in that**
said one or the plurality of, preferably six, clamping bodies (10) are preferably embodied spherically and supplement respectively in pairs the counter bodies (61) of the clamping insert, and wherein a circumferential wall of the recess (71) is segmented in accordance with the number of the pairs of spherical clamping bodies (10),
wherein each wall segment (74), following a spiral line, is extending from a proximal segment section proximal relative to the drilling needle (1) receivable between the clamping bodies (10) to a distal segment section, and wherein each transition between the proximal segment section and the distal segment section of neighboring wall segments (74) forms a stop (75) which projects into the recess (71).

3. Drill chuck according to claim 1 or 2, **characterized in that** the coupling partner (8) correlated with the drilling needle receiving device comprises a hollow cylinder section which is connected with the magnetic coupling disk (81) and in which a pin section (73) of the receiving element (7) is received and fixedly connected therewith.

4. Drill chuck according to at least one of the claims 1 to 3, **characterized in that**
the drill chuck comprises a front cover (2) with an opening for the drilling needle (1) and a housing section (3), detachably connectable or non-detachable connected to the front cover (2) and is connected detachably with a housing segment (4) surrounding the drive-associated coupling partner (9), wherein the hollow cylindrical magnetic holder is arranged on the inner wall of the housing section (3).

5. Drill chuck according to at least one of the claims 1 to 4, **characterized in that**
the drill chuck comprises a drilling needle guiding device (17) that comprises a drilling needle guiding sleeve which is supported rotatably in the opening of the front cover (2) so that the drilling needle (1) guided in the drilling needle guiding device (17) upon coupling of the drill chuck with the drive device is positioned concentrically with a motor drive shaft (12) of the drive device.

6. Drill chuck according to at least one of the claims 3 to 5, **characterized in that**
a distance between the magnetic coupling disks (81, 91) is adjustable for variation of the transmitted torque.

7. Drill chuck according to claim 6, **characterized in that** the adjustable distance is provided by an axial adjustability of the housing section (3) relative to the housing segment (4).

8. Drilling needle-drill chuck assembly that comprises a drill chuck according to at least one of the claims 1 to 7 and a drilling needle (1) wherein the drilling needle (1) comprises a flattened end section (1') on one side which is received in the drilling needle receiving device of the drill chuck, and wherein a cross-sectional size of the drilling needle (1) measured at a right angle to the flattened portion of the end section (1') is at most 5%, preferably about 3%, smaller than a diameter of the drilling needle (1).

## Revendications

1. Mandrin qui présente
- un dispositif de maintien de l'aiguille de perçage pour la prise amovible d'une aiguille de perçage (1) avec section terminale (1') aplatie,
- un support magnétique cylindrique creux pour le dispositif de maintien de l'aiguille de perçage
et
- un dispositif de couplage pour la transmission du couple d'un dispositif d'entraînement sur le dispositif de maintien de l'aiguille de perçage,
**caractérisé en ce que**
le dispositif de maintien de l'aiguille de perçage est formé pour la prise d'une section terminale (1') aplatie de l'aiguille de perçage (1) et présente un élément de prise (7), au moins un corps de serrage (10) et une pièce d'insertion de serrage (6),
- l'élément de prise (7) présentant au moins une section cylindrique (72) avec une cavité (71) et
- la pièce d'insertion de serrage (6) présentant un ou des corps de contre-moulage (61) qui complète/complètent au moins un corps de serrage (10) et qui s'étend/s'étendent depuis le disque de butée (62),
et le disque de butée (62) reposant sur une face frontale de la section cylindrique (72) et présentant une ouverture de passage (63) pour l'aiguille de perçage (1),
le ou les corps de contre-moulage (61) et au moins un corps de serrage (10) étant disposés dans la cavité (71) et pouvant recevoir par serrage la section terminale (1') aplatie de l'aiguille de perçage (1) entre le ou les corps de serrage (10) et les corps de contre-moulage (61),
et le dispositif de couplage étant un accouplement magnétique, le dispositif de maintien de l'aiguille de perçage présentant un premier partenaire de couplage (8) avec un disque d'accouplement magnétique (81) qui peut être mis en liaison d'action sans contact avec un disque d'accouplement magnétique (91) d'un partenaire de couplage (9) côté entraînement et
un aimant annulaire (13) constituant le support magnétique cylindrique creux et étant disposé, en étant espacé et sans contact, coaxialement autour de la section cylindrique (72) de l'élément de prise (7) et une bague d'espacement (14) sensible aux champs magnétiques entourant la section cylindrique (72).

2. Mandrin conformément à la revendication n°1, **caractérisé en ce que** un ou plusieurs, de préférence trois, corps de serrage (10) présentent de préférence une forme cylindrique et, une paroi complète de la cavité (71) étant segmentée en fonction du nombre de corps de serrage cylindriques (10) ou que
un ou plusieurs, de préférence six, corps de serrage (10) présentent de préférence une forme sphérique, complétant respectivement par paire les corps de contre-moulage (61) de la pièce d'insertion de serrage et une paroi complète de la cavité (71) étant segmentée en fonction du nombre de paires de corps de serrage sphériques (10),
chaque segment de paroi (74) suivant une ligne spirale, s'étendant d'une section de segment proximale en rapport avec l'aiguille de perçage (1) pouvant être prise entre les corps de serrage (10) vers une section de segment distale et chaque transition entre les sections de segment proximale et distale de segments de parois adjacents (74) formant une butée (75) s'étendant dans la cavité (71).

3. Mandrin conformément au moins à l'une des revendications n°1 ou n°2, **caractérisé en ce que**
le partenaire de couplage (8) affecté au dispositif de maintien de l'aiguille de perçage présente une section cylindrique creuse qui est reliée au disque d'accouplement magnétique (81) et dans lequel une section de pivot (73) de l'élément de prise (7) est logée et engagée de façon solidaire en rotation.

4. Mandrin conformément au moins à l'une des revendications n°1 ou n°3, **caractérisé en ce que**
le mandrin présente un cache frontal (2) avec une ouverture pour l'aiguille de perçage (1) et une section de boîtier (3) reliable de façon amovible ou relié de façon fixe avec le cache frontal (2), qui est reliée de façon amovible avec un segment de boîtier (4) entourant le partenaire de couplage (9) côté entraînement, le support magnétique cylindrique creux étant disposé sur la paroi intérieure de la section de boîtier (3).

5. Mandrin conformément au moins à l'une des revendications n°1 ou n°4, **caractérisé en ce que**
le mandrin présente un dispositif de guidage de l'aiguille de perçage (17) qui englobe un manchon de guidage de l'aiguille de perçage qui est monté de façon rotative dans l'ouverture du cache frontal (2) de façon à ce que l'aiguille de perçage (1) guidée dans le dispositif de guidage de l'aiguille de perçage (17) soit positionnable lors du couplage du mandrin avec le dispositif d'entraînement de façon co-centrique avec un arbre de sortie du moteur (12) du dispositif d'entraînement.

6. Mandrin conformément au moins à l'une des revendications n°3 ou n°5, **caractérisé en ce que**
un espacement est réglable entre les disques d'accouplement magnétique (81, 91) pour la variation du couple transmis.

7. Mandrin conformément à la revendication n°6, **caractérisé en ce que** l'espacement réglable est assuré par un réglage axial de la section de boîtier (3) par rapport au segment de boîtier (4).

8. Disposition aiguille de perçage-mandrin qui présente un mandrin conformément au moins à l'une des revendications n°1 à n°7 et une aiguille de perçage (1), l'aiguille de perçage (1) présentant une section terminale (1') aplatie d'un côté, qui est logée dans le dispositif de maintien de l'aiguille de perçage et une dimension en coupe transversale de l'aiguille de perçage (1) perpendiculaire à l'aplatissement de la section terminale (1') étant maximum de 5%, de préférence de 3% inférieure à un diamètre de l'aiguille de perçage (1).
